# EUROPEAN PATENT APPLICATION

(11) **EP 1 695 617 A1**
(43) Date of publication of application: **30.08.2006**
(21) Application number: 05394032.6
(22) Date of filing: 18.11.2005
(51) Int. Cl.: A01K 15/00, A01K 1/06

(54) **An animal handling apparatus**

(30) Priority: 19.11.2004 IE 20040772
(71) Applicant: Hourigan, Michael Patrick, Dungarvan, County Waterford (IE)
(72) Inventor: Hourigan, Michael Patrick, Dungarvan, County Waterford (IE)
(74) Representative: Schütte, Gearoid

(57) **Abstract**

An animal crush (1) comprising an animal reception chamber (2) having a moving side wall (5) and a fixed side wall (6) is provided. The crush (1) has means (9) to pivot the moving side wall (5) toward and away from the fixed side wall (6) to restrain an animal within the chamber (2). The chamber is also able to be inverted enabling the underside of an animal restrained within the chamber (2) to be handled and in a manner which reduces stress to the animal and minimises the potential for harm to operators. The animal crush (1) is also able to be easily and efficiently mounted onto a mobile trailer unit for efficient transportation between locations for use.

## Description

### Introduction

The present invention relates to animal handling apparatus, and in particular an animal crush of the type comprising an animal reception chamber having an animal receiving end, an animal discharge end, a moving side wall and a fixed side wall, which walls each have a proximal end and a distal end and which are spaced apart relative to one another each adjacent a longest side of an elongate base panel to define an upwardly facing open mouth, the walls and base panel extending in the direction of movement of an animal through the chamber from the animal receiving end to the animal discharge end, the crush further comprising means for pivoting the moving side wall toward and away from the fixed side wall to move the chamber between an animal restraining position and an animal release position.

In a further aspect the present invention relates to other types of animal handling equipment, and in particular to a shearing gate and a penning system.

In a still further aspect the present invention also relates to an animal handling apparatus for handling animals, comprising one or more of an animal crush, a shearing gate and a penning system.

Animal crushes are well known and are used in particular to restrain animals for veterinarian and related practices including medical operations, vaccinations and branding. Rotatable animal crushes have also been developed which allow the animal to be inverted or partially inverted so that an operator can gain access to the underside of the animal to clean them and to pare their feet.

In previous types of rotable animal crushes the animals were held in position and turned using a jaw like structure comprising a number of spaced apart bars extending from a top bar. One of the main difficulties with this type of crush is that such crushes are extremely large and unwieldy for operators to use, and are moreover, unable to be easily transported between different locations for use. Furthermore, the configuration of such crushes have hereto before not enabled operators to maintain a close proximity to an animal being restrained in the crush when it is rotated so that the animal can be closely monitored. Accordingly, in prior art crushes, operators have heretofore been unable to visually inspect at close quarters an animal as it is being rotated.

Additionally, it has been difficult to place the animal in the correct position in such crushes to allow the animal to be successfully restrained and rotated. For example, if the animal has moved too far forward in the crush or has not sufficiently entered the crush the flanks of the animal will not be sufficiently held by the bars and the animal will not be turned within the crush. A further disadvantage with this type of rotable animal crush is that if the animal kneels down in the crush before being restrained it is not possible to grasp the animal or to turn them using this jaw structure. Additionally as it is extremely difficult to entice the animal to stand up again in the crush after kneeling down, this is a very time consuming and frustrating exercise.

Furthermore, it has been found that even if an animal is successfully held and turned using this type of crush that the limbs of the animal are frequently caught between the bars when in an inverted position distressing the animal and sometimes causing the animal to go into shock. As the limbs of the animal are restrained they can become rigid and more susceptible to breakage. Thus there is a need for a rotatable animal crush which overcomes the above problems.

Generally with animal handling equipment the animal is restrained around the body. This type of equipment is unsuitable however if after the animal is restrained access to the whole body of the animal is required. One example of this is restraining an animal such as a sheep for shearing. Conventionally in order to shear a sheep, it must first be caught and carried to where it is to be sheared. This is another time-consuming and exhausting procedure.

Additionally, penning systems are well known to retain animals within a defined area. Penning systems generally comprise a plurality of gates each having a number of tubular shaped brackets fitted to each side of the gate, the gates being fitted together by placing a tubular bar between the brackets. One of the main difficulties with this type of penning system is that the gates which are usually placed on uneven terrain are not all in contact with the ground. Unstable systems such as these frequently collapse, due to an animal knocking against it or even a strong gust of wind.

Thus there is a need for animal handling equipment which obviates the problems of the above procedures. It is therefore an object of the present invention to provide an animal handling apparatus which goes someway toward overcoming at least some of the above disadvantages, and/or which will provide the public and/or industry with a useful choice.

It is acknowledged that the term 'comprise', under varying jurisdictions may be provided with either an exclusive or inclusive meaning. For the purpose of this specification, and unless otherwise noted explicitly, the term comprise shall have an inclusive meaning - i.e. that it may be taken to mean an inclusion of not only the listed components it directly references, but also other non-specified components. Accordingly, the term 'comprise' is to be attributed with as broad an interpretation as possible within any given jurisdiction and this rationale should also be used when the terms 'comprised' and/or 'comprising' are used.

### Statements of Invention

According to the invention there is provided an animal crush of the type comprising an animal reception chamber having an animal receiving end, an animal discharge end, a moving side wall and a fixed side wall, which walls each have a proximal end and a distal end and which are spaced apart relative to one another each adjacent a longest side of an elongate base panel to define an upwardly facing open mouth, the walls and base panel extending in the direction of movement of an animal through the chamber from the animal receiving end to the animal discharge end, the crush further comprising means for pivoting the moving side wall toward and away from the fixed side wall to move the chamber between an animal restraining position and an animal release position characterised in that the chamber is rotatably connected to a fixed support framework so as to be rotatable in the horizontal plane about a pivot which extends from the support framework into a location substantially adjacent the centre of a side edge of the chamber so that the chamber can be inverted, and in which one of the fixed side wall or the movable side wall comprises an animal support shelf which extends laterally across at least a portion of the open mouth of the chamber to retain an animal being restrained in the chamber when it is inverted.

Such an animal crush may be used to for a variety of animals, although it is envisaged that the animal crush is particularly suitable for use with farm animals including cattle, but more particularly, sheep.

The advantage of a chamber which is operable to be rotated to invert an animal retained therein is that the underside of the animal is able to be handled efficiently and in a manner which reduces stress to the animal and minimises potential harm to operators. Moreover, the ability to rotate the chamber in the horizontal plane about a pivot which extends directly from the support framework adjacent the centre of a side edge of the chamber to the chamber will minimise the turning circumference of the chamber when inverted so that operators may maintain a close proximity to the animal during inversion of the crush. Furthermore, the provision of such a simply constructed support shelf which provides a surface for the animal to lie on when the chamber has been inverted to the animal handling position is particularly advantageous. The animal will therefore be comfortable when in this position and will be more likely to lie still while the operator treats the animal.

In another embodiment of the invention, the base panel comprises a hatch which is releaseably connected adjacent to the proximal end of one of the fixed side wall and the moving side wall and-pivotally connected adjacent to the proximal end of the other of the moving side wall and fixed side wall.

The provision of a chamber base, provided as the base panel, comprising a hatch which is able to be opened will enable the chamber to be opened from the top when in the inverted position, which will in turn enable an operator to have access to the underside of the animal so that the animal may be treated and/or closely observed is advantageous.

In a further embodiment of the invention, the walls form a substantially inverted truncated "V" shape when in the animal restraining position.

This is advantageous in that when the animal is in the animal handling position the limbs of the animal are free to move about to some extent. This is more favourable for the animal as they will remain more comfortable and relaxed if they can move their limbs.

In another embodiment of the invention, the means for moving the movable side wall comprises a ratchet mechanism which locks the movable side wall relative to the fixed side wall in either the animal restraining position or the animal release position.

This is an accurate way of controlling movement between the side panels and is further advantageous in that the relative movement between the side panels is not restricted to defined distances, but rather to any point between the panels.

Preferably, the support shelf has a width of greater than half of the width of an animal restrained within the chamber. At this width, the shelf will be wide enough to comfortably support the animal when the chamber is inverted.

Preferably, at least a portion of the base panel comprises a mesh sheet. The advantage of the base panel being of a mesh sheet is that it is possible to visually monitor the animal during rotation and while the animal is in the animal handling position and before the base panel is opened. This is advantageous as occasionally when animals are inverted they can become stressed and go into shock sometimes leading to the death of the animal. Being able to visually monitor the animal at all times will obviate this. Alternatively, the base panel comprises polypropylene panels.

In another embodiment of the invention, the crush further comprises a handle with which to rotate and invert the chamber.

Such a provision will enable operators to manually and easily rotate the chamber through any angle. Accordingly, operators by appropriate actuation of the handle the chamber may be rotated to the angle required for treatment of the animal retained within the chamber.

Preferably, the pivot extends from the support framework longitudinally along the centre of the fixed side wall.

The provision of a pivot located longitudinally through the centre of the fixed side wall of the chamber is particularly advantageous as the turning circumference of the crush when rotated will be reduced. This will enable the crush to be positioned in locations in which space is restricted. Furthermore, it will enable operators to position themselves close to the crush and therefore the animal as it is being rotated.

Preferably the animal crush is mountable on a mobile trailer unit.

The advantage of mounting the crush onto a mobile trailer unit is that the crush may be moved between locations for use. Further, the height provided by the chassis of the trailer unit provides the required ground clearance for optimal operation of the crush.

According to the invention there is further provided a shearing gate comprising:
a pair of support bars;
a peripheral frame forming top, bottom and side edges of the gate; and
a plurality of spaced horizontal rails secured between the side edges of the frame;
characterised in that;
the gate further comprises biasing means to control movement of the gate between a closed position and an open position.

Preferably the gate moves vertically between the closed position and the open position.

Further preferably the gate is biased in the closed position. Ideally the biasing means consists of a pair of tensioned springs extending between the top edge of the gate and the support bars.

Preferably movement of the gate between the closed position and open position comprises exerting a downward force on the gate.

According to the invention, there is still further provided a penning system comprising:
a plurality of gates;
each gate comprising a peripheral frame forming top, bottom and side edges of the gate and a plurality of spaced - apart rails parallel to the top and bottom edges and secured between the side edges of the frame; and
at least one bracket attached to the side edge of each gate and a bar for inserting through each bracket to link the side edge of one gate to the side edge of another gate;
characterised in that;
the bracket on at-least one of the gates is substantially "U" shaped.

The "U" shaped brackets allow the bars to move around within the brackets. This is advantageous in that as the bar can move horizontally within the brackets this allows some movement of the gates relative to each other and into a position where the bottom edge of each gate contacts the ground thus allowing all the gates to touch the ground resulting in a more stable penning system.

In one embodiment of the invention, both of the gates comprise at least one substantially "U" shaped bracket. In another embodiment of the invention one of the gates comprises at least one substantially "U" shaped bracket and the other of the gates comprises a substantially tubular shaped bracket.

Preferably the bar comprises a pair of connected substantially tubular shaped rods, one of the rods being shorter that the other rod. Further preferably, when one of the gates comprises substantially tubular shaped brackets and the other of the gates comprises substantially "U" shaped brackets, the shorter rod is inserted through the substantially tubular shaped brackets and the longer of the rods is inserted through the substantially "U" shaped brackets.

Preferably, each gate comprises a rounded corner between each side edge and the bottom edge of the gate. This allows the gates to be easily dragged into position on rough terrain, without the corners catching or snagging, so that the gates can be moved quickly and easily without the need for mounting them on wheels or castors.

According to the invention there is also provided an apparatus for handling animals comprising one or more of an animal crush, a shearing gate and a penning system.

Preferably the apparatus for handling animals is mountable on a mobile trailer.

The advantage of mounting the crush onto a mobile trailer unit is that the crush may be moved between locations for use. Further, the height provided by the chassis of the trailer unit provides the required ground clearance for optimal operation of the crush.

### Detailed Description of the Invention

The invention will be now more clearly understood from the following description of some embodiments thereof given by way of example only with reference to the accompanying drawings in which:
Fig. 1 is a perspective view of an animal crush according to the present invention;
Fig. 2a is a cross-sectional diagrammatic view of the animal crush illustrated in Fig. 1 in an animal release position;
Fig. 2b is a cross-sectional diagrammatic view of the animal crush illustrated in Fig. 1 in an animal restraining position;
Fig. 2c is a cross-sectional diagrammatic view of the animal crush illustrated in Fig. 1 having been inverted;
Fig. 3 is a schematic showing the progressive positions of the animal crush illustrated in Fig. 1 being inverted.
Fig. 4 is a perspective side view of a shearing gate according to a further aspect of the present invention.
Fig. 5 is a perspective view of the shearing gate shown in Fig. 4 in the closed position.
Fig. 6 is a front perspective view of a penning system according to yet a further aspect of the present invention.
Fig. 7 is a front perspective view of gates used with the penning system shown in Fig. 6;
Fig. 8 is a front perspective view of the animal crush shown in Fig. 1 mounted to a mobile trailer unit;
Fig. 9 is a back perspective view of the animal crush shown in Fig. 8;
Fig. 10 is a front side perspective view of Fig. 8 in which the crush has been inverted;
Fig. 11 is a plan view of the animal crush shown in Fig. 1 and the shearing gate shown in Fig. 4 both mounted to a mobile trailer unit;
Fig. 12 is a side perspective view of a ramp used by the trailer unit shown in Fig. 8, and
Fig. 13 is an underside perspective view of a chassis used by the trailer unit shown in Fig. 8.

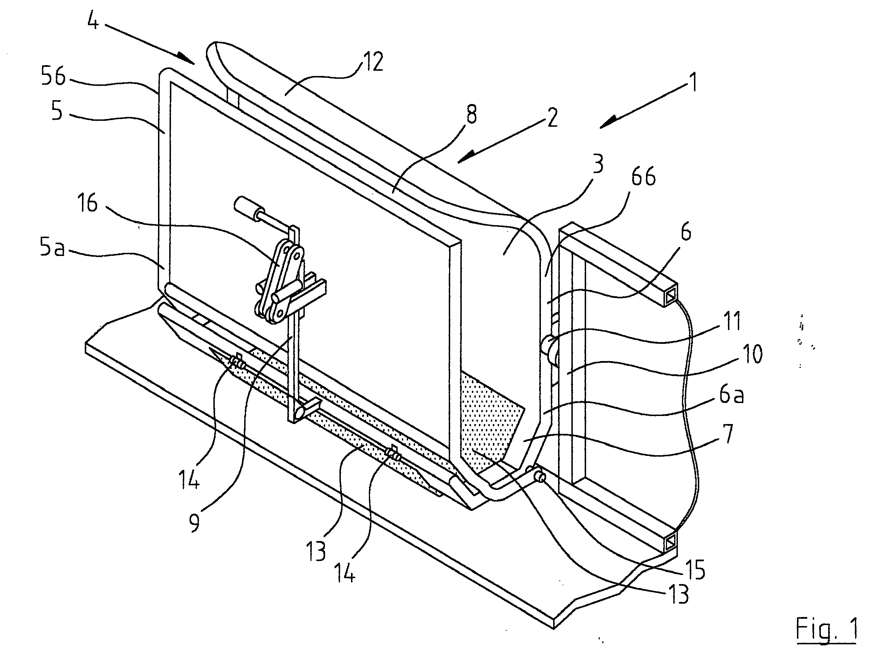

Referring to the drawings and initially to Fig. 1, there is provided an animal crush indicated generally by reference numeral 1 comprising an animal reception chamber, indicated generally by reference numeral 2 having an animal receiving end 3 and an animal discharge end 4. The chamber 2 further comprises a moving side wall 5 and a fixed side wall 6 each of which have respective proximal ends 5a, 6a and distal ends 5b,6b and which are spaced apart relative to each one another each along a longest side of an elongate base panel 7 to define an upwardly facing open mouth 8. It should be appreciated that the moving side wall 5, the fixed side wall 6 and the base panel 7 all extend in the direction of movement of an animal through the chamber 2 form the animal receiving end 3 to the animal discharge end 4. Also shown is means, generally indicated by the reference numeral 9 for pivoting the moving side wall 5 toward and away form the fixed side wall 6 about the pivot 15 to move the chamber 2 between an animal restraining position and an animal release position. A portion of the base panel 7 also comprises a mesh sheet which enables an animal being retained within the chamber 2 to be observed.

The chamber 2 is rotatably connected to a fixed support framework 10 which, in the instance shown, is located at the animal receiving end 3 of the chamber. The chamber 2 is rotatable in the horizontal plane about a pivot 11, which pivot 11 extends from the support framework 10 to the chamber 2 so that chamber 2 can be inverted. In the instance shown, the pivot 11 extends longitudinally from the support framework 10 into a location substantially adjacent the centre of a side edge of the fixed side wall 6 of the chamber 2, although it should be appreciated that the fixed support framework 10 and associated pivot 11 may also be positioned relative to either or both ends 3,4 of the chamber2, or may alternatively surround the entire chamber 2. As shown, the pivot 11 connects substantially near the centre of a side edge of the fixed side wall 6. The animal crush 1 will also generally be raised off the ground by the framework 10 to allow for the required ground clearance so the crush can be inverted.

The distal end 6b of the fixed side wall 6 comprises an animal support shelf 12 which extends laterally across at least a portion of the open mouth 8 of the chamber 2 to retain an animal being restrained in the chamber 2 when it is inverted. In the instance shown the support shelf 12 extends from the fixed side wall 6 but it could equally and just as effectively extend from the distal end 5b of the moveable side wall 5. The support shelf 12 has a width of greater than half of the width of an animal restrained within the chamber 2. The side walls 5, 6 are substantially flat and will extend to encompass substantially most of the length of an animal to be contained in the animal reception chamber 2.

The base panel 7 also comprises a closable opening or hatch 13 which, in the instance shown, is releaseably connected at one end near the proximal end 6a of the fixed side wall 6 and pivotally connected to the base panel 7 adjacent the proximal end 5a of the moving side wall 5. When the chamber has been inverted, or rotated, the hatch 13 can be disconnected from the fixed side panel 6 and then pivoted open via hinges 14 to expose an animal being retained in the chamber 2. The base panel 7 can also comprise a shock absorber to prevent it from opening out fully and colliding with one or other of the side walls 5,6.

In the instance shown, the means 9 for moving the movable side wall 5 comprises a ratchet mechanism and associated actuator 16 which locks the movable side wall 5 relative to the fixed side wall 6 in either the animal restraining position or the animal release position.

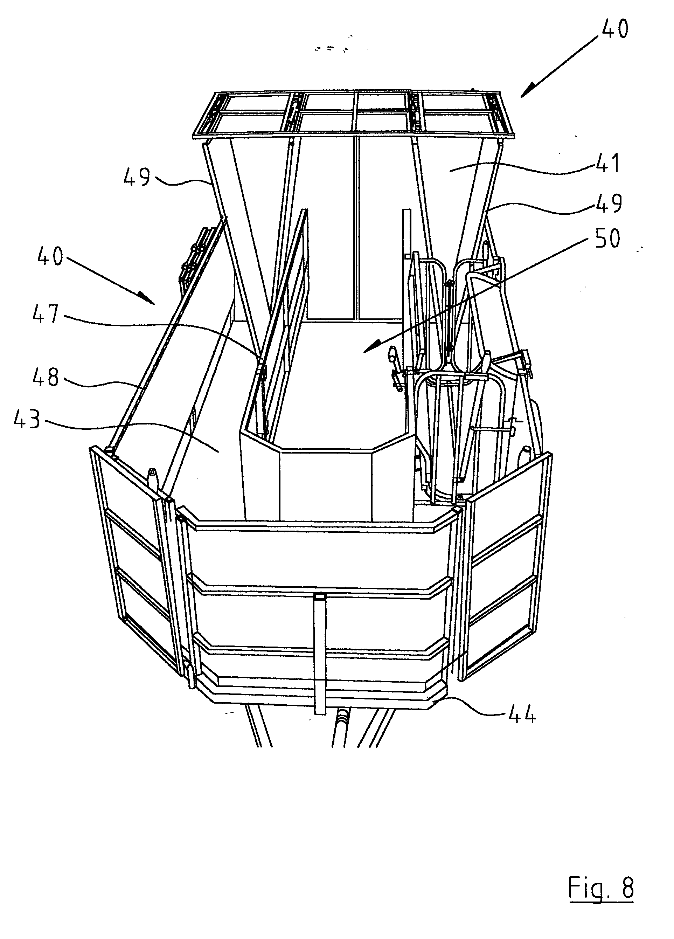

The crush 1 further comprises a handle (not shown) with which to rotate and invert the chamber 2 as required. Turning briefly to Figs. 8, 9 and 10, as shown, the animal crush 1 is also able to be mounted onto a mobile trailer unit for ease of portability.

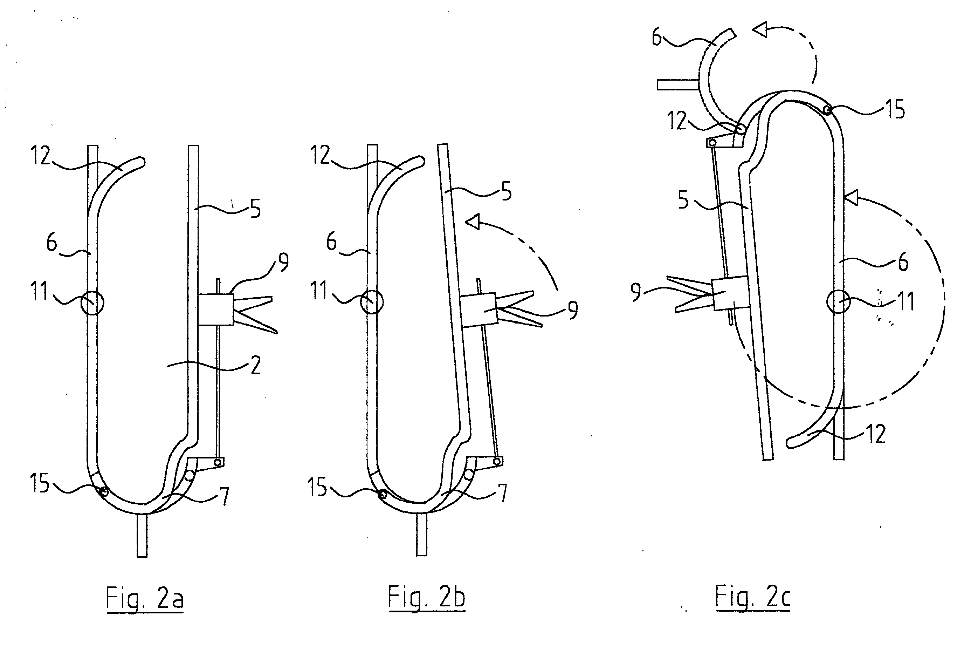

Figs. 2a to 2c show the animal crush depicted in Fig. 1, again identified by the reference numeral 1, with parts similar to those described already identified by the same reference numerals. With reference initially to Fig. 2a, when the movable side wall 5 is inclined towards the fixed side wall 6 by the ratchet mechanism 9 about pivot 15 the walls 5,6 together form substantially an inverted truncated "V" shape to be in the animal restraining position, as shown in Fig. 2b. With reference now to Fig. 2c, the chamber 2 is rotated to assume an animal handling position. In this position the chamber 2 has been rotated at an angle in the region of 180° to invert the chamber 2. As shown, when in the animal handling position the hatch 13, located on the base panel 7, can be opened via base hinges 14.

In use, the animal enters the crush 1 and stands on the base panel 7. An operator is positioned adjacent the movable side panel 5 and inclines the movable side panel 5 towards the fixed side panel 6 using the ratchet mechanism 9 to reduce the volume of the animal reception chamber 2 until the flanks of the animal are squeezed. Once the chamber 2 is rotated approximately 180° the head and back of an animal retained within the chamber 2 now rest on the support shelf 12, which is now at the base of the crush 1. The base panel 7 is now at the top of the crush 1 and the hatch 13 can then be opened as described to allow the operator access to the underside and limbs of the animal.

When the operator has completed his work on the animal the hatch 13 is closed and the chamber 2 is rotated back to the starting non-inverted position. The movable side panel 5 is now moved away from the fixed side panel 6 using the ratchet mechanism 9, so that the animal reception chamber 2 is now in the animal release position. The animal is now free to exit the crush 1.

The animal crush 1 can optionally further comprise a number of weigh cells (not shown) placed at some position such as each corner of the base panel 7 for weighing the animal in the crush 1. Digital weigh cells have been found to be most accurate.

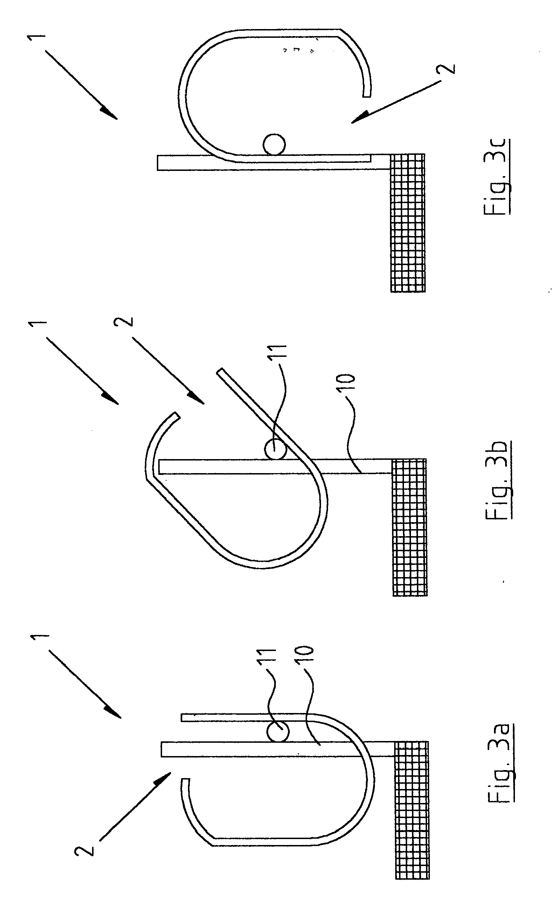

Fig. 3, again with like parts using the same numeral identification system of Figs. 1 and 2a-2c, shows the progressive positions of the chamber 2 when it is being inverted as described in Fig. 2a-2c.

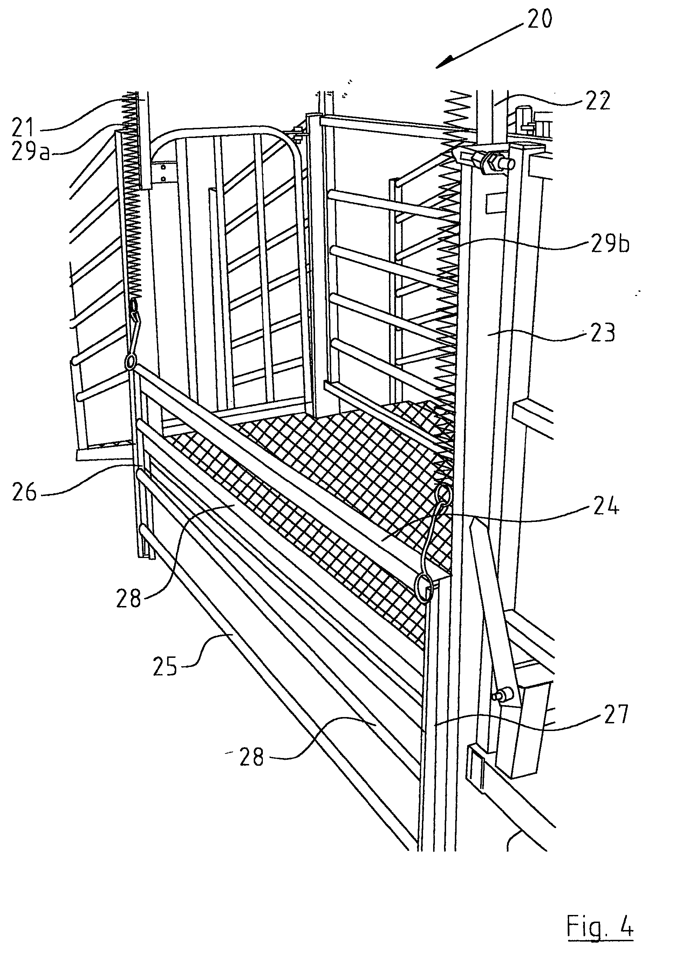

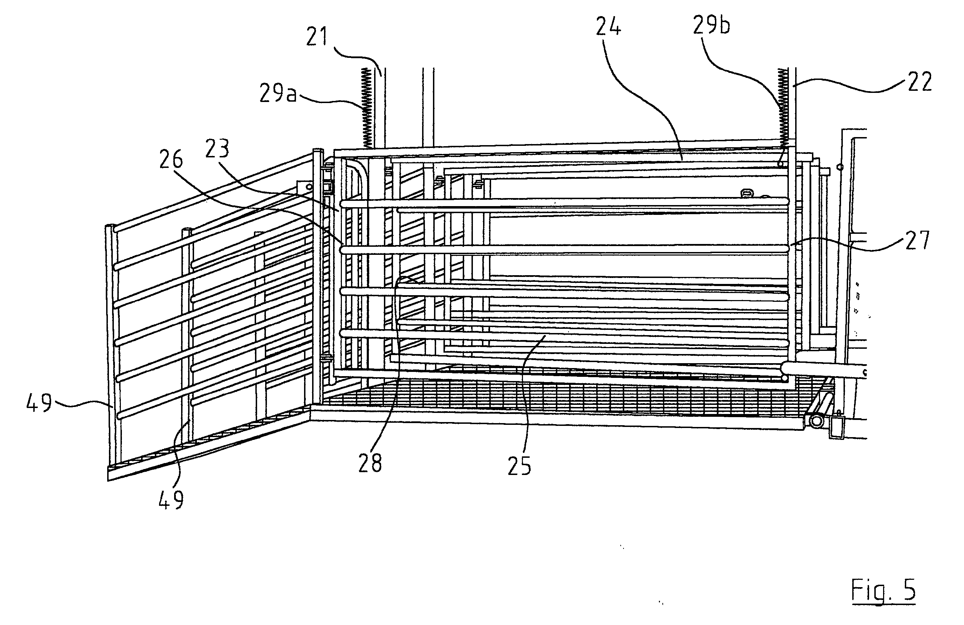

With reference to Figs. 4 and 5, there is shown a shearing gate, indicated generally by reference numeral 20 comprising a pair of upright supports 21, 22 and a peripheral framework 23 mounting an elongate horizontal top frame bar 24 spaced apart from an elongate horizontal bottom frame bar 25 by upright side frame bars 26, 27. The gate 20 further comprises a plurality of spaced apart elongate horizontal rails 28 which extend parallel to the bars 24, 25 between the upright bars 26, 27. The gate 20 further comprises a pair of tensioned springs 29a, 29b extending from the top edge of the support bars 21, 22 to the top edge of the top frame bar 24. The gate 20 may readily be fitted to or associated with an animal race or animal pen as required.

Fig. 4 shows the shearing gate 20 in an open position with the springs 29a, 29b tensioned whilst Fig. 5 shows the gate 20 in a closed position with the springs 29a, 29b untensioned. In use the operator positions himself on one side of the gate 20 with an animal requiring a treatment or procedure being positioned on the opposite side of the gate 20. The operator opens the gate 20 by exerting a downward force on the gate 20, for example, by leaning his elbow or arm on the top frame bar 24 of the gate 20. The springs 29a, 29b will tension and the gate 20 will be forced down to the open position. When the gate 20 is in the open position the operator can then, for example, flip an animal over the gate 20 and into a shearing position. The operator will may then remove his elbow from the gate 20 so that the springs 29a, 29b will untension and the gate 20 will move vertically upwards to its closed position.

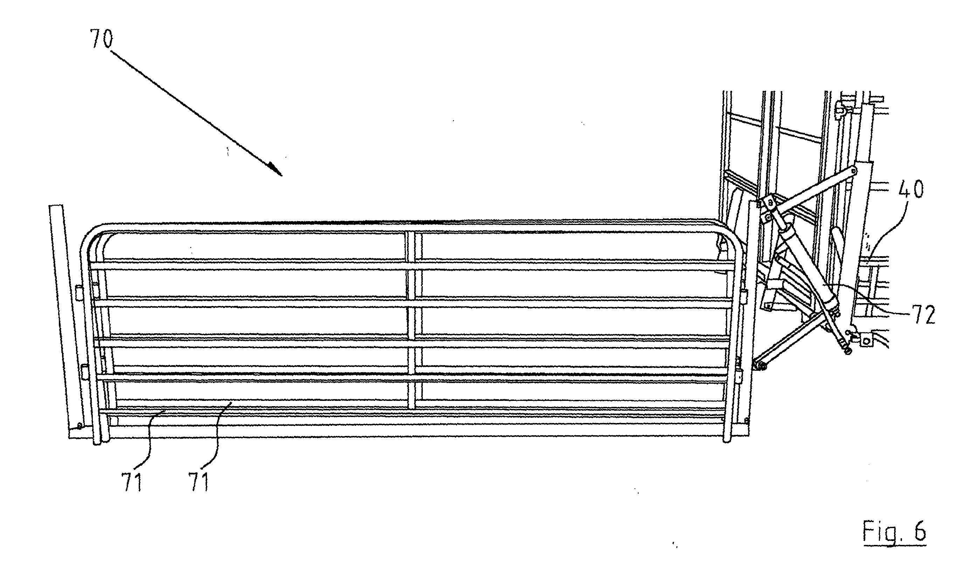

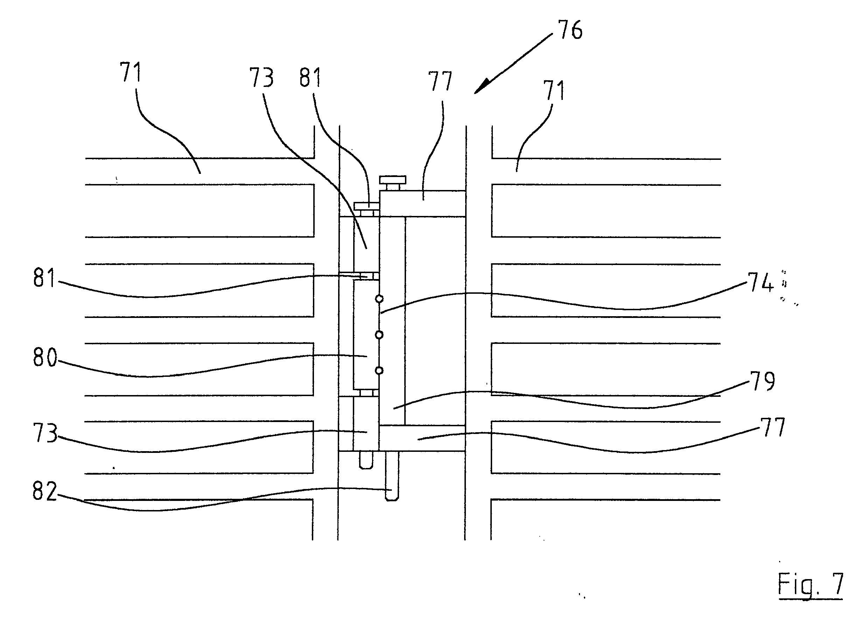

With reference to Figs. 6 and 7, and initially to Fig. 6, there is provided a penning system indicated generally by reference numeral 70 comprising a plurality of gates 71 which may be stored on a mobile trailer unit 40 (only the rear of which is shown in Fig. 6) and which may be positioned by means of a hydraulic ram 72 on the ground. The gates 71 could be arranged to provide a pen for the animals and can be rotated by the hydraulic ram 72 to any position around the sides of the chassis (not shown) of the mobile trailer unit (40) and be carried at those various positions during movement of the trailer unit 40.

Therefore, the hydraulic ram 72 allows the gates 71 to be raised onto the side of the trailer unit 40 or to be lowered to ground level to provide a pen. One of the gates 71 is permanently linked to the hydraulic ram 72 at one side with the other gates 71 (only one of which is shown in Fig. 6) being inter-linked to each other by the connection system shown in Fig. 7. In the instance shown in Fig. 7, the connection system, indicated generally by the reference numeral 76 comprises a pair of substantially tubular shaped spaced apart brackets 73 which extend from one of the gates 71 and engage with a pair of substantially "U" shaped spaced apart brackets 77 which extend from another gate 71 to be connected to the first gate 71. A connector 74 comprising a pair of joined substantially tubular shaped pipes 79, 80 is inserted between brackets 73, 77 so that the pipe 79 sits between the "U" shaped brackets 77 and the pipe 80 sits between the tubular shaped spaced apart brackets 73. A short rod 81 is inserted through the substantially tubular shaped brackets 73 and the pipe 80, and a longer rod 82 is inserted through the substantially "U" shaped brackets 73 and the pipe 79. This arrangement provides an efficient and convenient system for transporting and constructing a portable animal pen. This configuration for a penning system also allows some movement of the gates 75, 78 relative to each other and into a position where the bottom of each gate contacts the ground resulting in a more stable penning system 70.

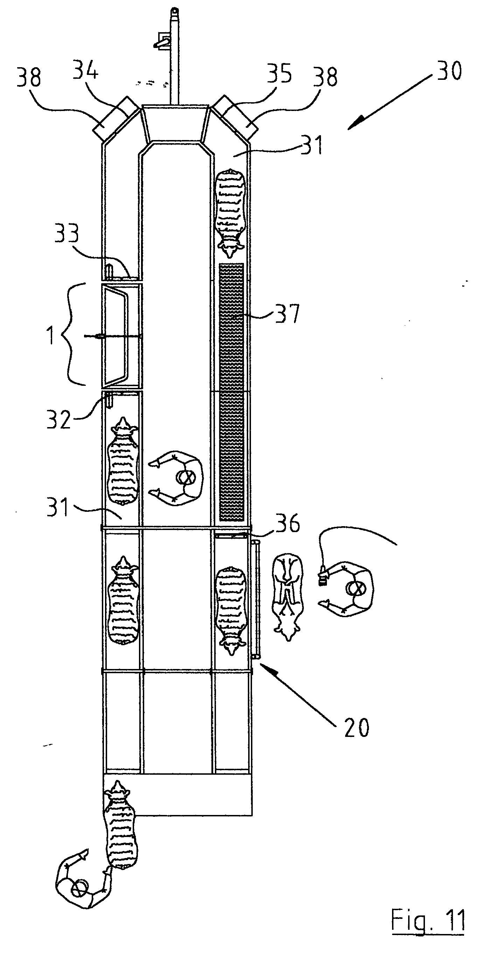

According to Fig. 11 there is illustrated an animal handling apparatus, indicated generally by reference numeral 30, comprising an animal crush, again identified by the reference numeral 1, and a shearing gate, again identified by the reference numeral 20, and a walkway or animal race 31 along which an animal may proceed through the apparatus 30. In the instance shown, the animal crush 1 further comprises a crush entry gate 32 and a crush exit gate 33. Downstream of the animal crush 1 there is provided further exit gates 34, 35 and 36. Fold down ramps 38 may also be provided on the exterior of the gates 34, 35 which allow easier descent of animals from out of those gates.

In operation, an animal enters the animal crush 1 through the crush entry gate 32. This gate 32 is generally of the swinging fold type so that it closes automatically behind the animal and cannot swing in the opposite direction therefore preventing the animal reversing out of the gate 32. If for some reason the operator wishes to remove the animal from the handling apparatus 30 after exiting the animal crush 1 the animal can exit through the exit gate 34, which is preferably a hinged exit gate which opens inwards so as to block the walkway 31 when opened so that the animal must exit the race 31. Alternatively the animal can be retained in the animal handling apparatus 30 and may exit through either of the gates 35 or 36. The animal handling apparatus 30 could also optionally be fitted with other types of equipment such as a footbath 37 or an overhead line for carrying dose bottles (not shown).

Additionally, the animal handling apparatus 30 could also be fitted with a sensor (not shown) for counting the animals as they pass a certain point in the race 31.

It will be appreciated that the animal handling apparatus 30 may comprise one or more than one type of the above-mentioned equipment. For example, if the animal handling apparatus 30 comprised only a footbath 37 the apparatus could be placed between two adjoining fields. In this embodiment, the animals could enter through the gate 35 and walk along the footbath 37 prior to exiting the animal handling apparatus 30 into an adjoining field. It has been found that in this case there is no need to round up the animals, as the animals knowing that they will get fresh grass in the second field will be automatically enticed to enter the animal handling apparatus 30.

The animal handling apparatus 30 may be a stationary apparatus or may be mounted on a mobile trailer unit, such as that shown in Figs. 8, 9 and 10 so as to be suitable for moving to a desired location.

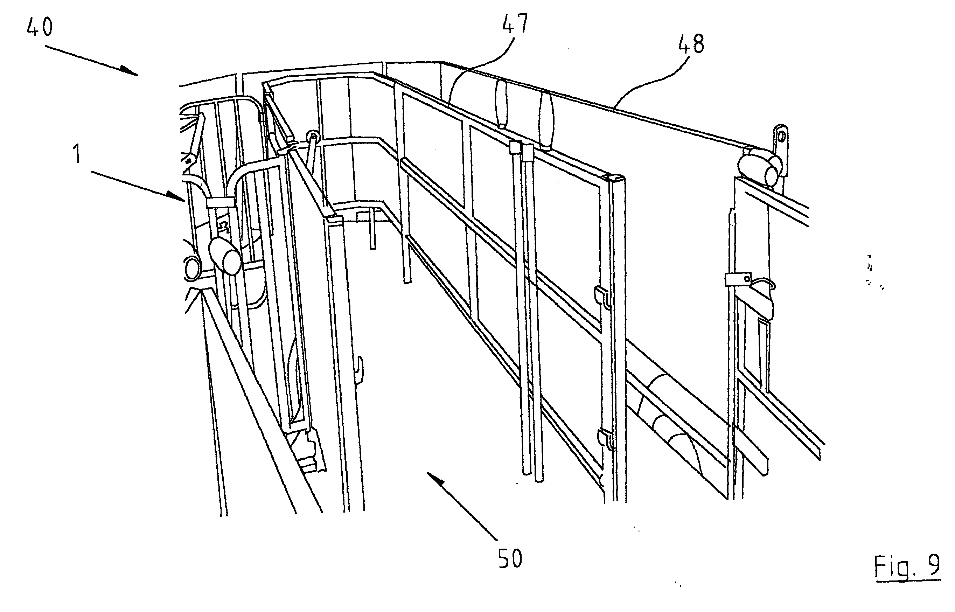

In such an embodiment, and with reference again to Figs. 8 and 9, such a trailer unit 40 will comprise a ramp 41 which tilts up and down to enable animal access onto and off the trailer 40 for access to the apparatus 30 when mounted on the trailer 40. The ramp 41 may also include a second smaller ramp to accommodate an incline onto the trailer chassis. Such a smaller ramp may fold up into a locking position on the ramp 41, which ramp 41 may in turn also fold up onto the chassis.

The race 31 is seated on a trailer platform 43 which is in turn mounted on the trailer chassis (not shown). The trailer 40 includes independent braked suspension axles and a heavy duty jack and a towing hitch. In the instance shown, the race comprises an inner barrier 47 and outer barrier 48 which stand upright on the platform 43 and which together form a channefled pathway along which animals may walk through the handling apparatus 30 when mounted on the trailer 40. An operators workstation 50 is also shown along which operators may have access to animals in the race 31. The ramp 41 is shown in its raised position in Fig. 8 and can be lowered by the use of by any suitable detachment means, such as drop-down latches.

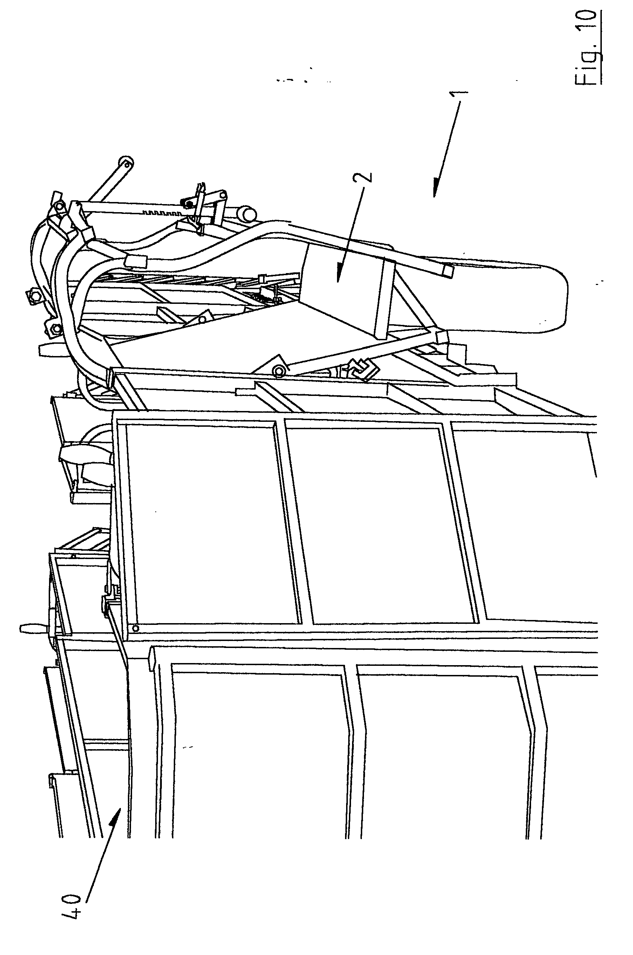

The ramp 41 also comprises upright channelling barriers 49 (also shown in Fig. 5) which may be constructed of any suitable material, however tubular piping having a diameter of 20mm is favourable in that it reduces the overall weight of the ramps 41. Also shown in Fig. 10 are handle mechanisms which run under the floor of the chassis joining the front gates 34, 35 to two handles situated half way along the operators work station and fixed to the internal side of the race opposite the crush.

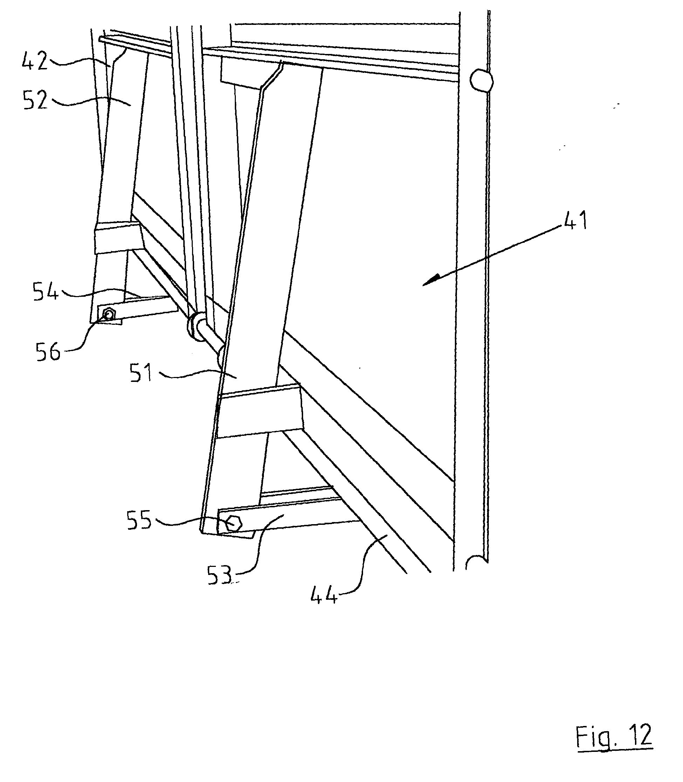

With reference to Fig. 12, again with parts similar to those described already identified by the same reference numerals, there is illustrated the linking mechanism between the ramp 41 and the trailer chassis 44, which mechanism comprises a pair of spring actuating levers 51, 52 which are attached to ramp 41. Each spring actuating lever 51, 52 is further connected to a pair of follower arms 53, 54 via pivot pins 55, 56. The follower-arms 53, 54 extend under the chassis 44 of the trailer.

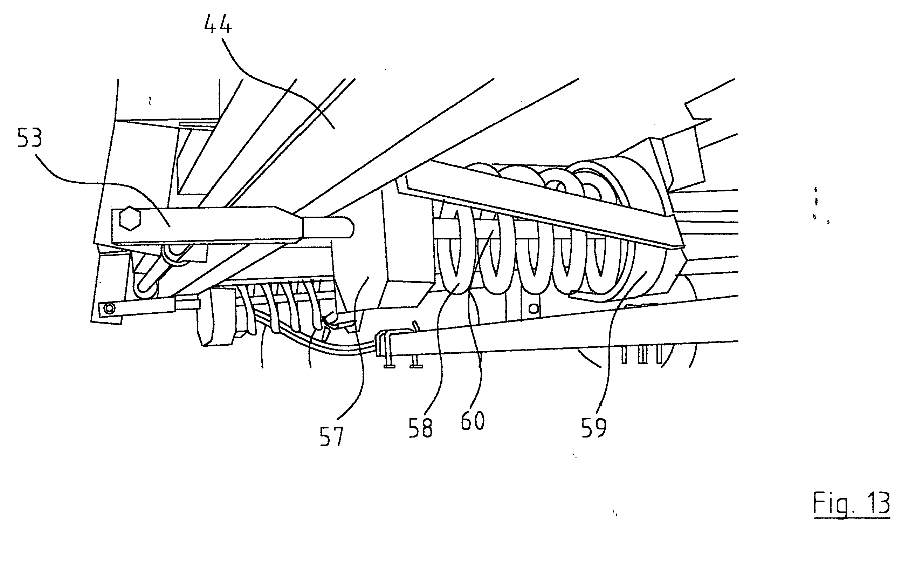

Referring now to Fig. 13, again with parts similar to those described already identified by the same reference numerals, there is illustrated the underside of the chassis 44 showing the follower arms 53, 54. In the instance shown, the follower arm 53 is connected to a movable spring mounted cap 57. A coil compression counterbalance spring 58 is positioned between the movable spring cap 57 and the fixed spring cap 59 and is spirally wound along the length of a central guide 60. The central guide 60 slides axially through a hole in the fixed spring cap 59. The linking mechanism associated with the follower arm 54 is similar to that shown for the follower arm 53.

The clearance provided by the chassis above the ground will also ensure optimal functioning of each of the animal crush and shearing gate when mounted on the trailer.

Aspects of the present invention have been described by way of example only and it should be appreciated that additions and/or modifications may be made thereto without departing from the scope thereof as defined in the appended claims.

## Claims

1. An animal crush (1) of the type comprising an animal reception chamber (2) having an animal receiving end (3), an animal discharge end (4), a moving side wall (5) and a fixed side wall (6), which walls (5),(6) each have a proximal end (5a),(6a) and a distal end (5b),(6b) and which are spaced apart relative to one another each adjacent a longest side of an elongate base panel (7) to define an upwardly facing open mouth (8), the walls (5),(6) and base panel (7) extending in the direction of movement of an animal through the chamber (2) from the animal receiving end (3) to the animal discharge end (4), the crush (1) further comprising means (9) for pivoting the moving side wall (5) toward and away from the fixed side wall (6) to move the chamber (2) between an animal restraining position and an animal release position **characterised in that** the chamber (2) is rotatably connected to a fixed support framework (10) so as to be rotatable in the horizontal plane about a pivot (11) which extends from the support framework (10) into a location substantially adjacent the centre of a side edge of the chamber (2) so that the chamber (2) can be inverted, and in which one of the fixed side wall (6) or the movable side wall (5) comprises an animal support shelf (12) which extends laterally across at least a portion of the open mouth (8) of the chamber (2) to retain an animal being restrained in the chamber (2) when it is inverted.

2. An animal crush (1) as claimed in claim 1, in which the base panel (7) comprises a hatch (13) which is releaseably connected adjacent to the proximal end of one of the fixed side wall (6) and the moving side wall (5) and pivotally connected adjacent to the proximal end of the other of the moving side wall (5) and fixed side wall (6).

3. An animal crush (1) as claimed in claim 1 or 2, in which the walls (5),(6) form a substantially inverted truncated "V" shape when in the animal restraining position.

4. An animal crush (1) as claimed in any preceding claim, in which the means (9) for moving the movable side wall (5) comprises a ratchet mechanism which locks the movable side wall (5) relative to the fixed side wall (6) in either the animal restraining position or the animal release position.

5. An animal crush (1) as claimed in any preceding claim, in which the support shelf (12) has a width greater than half of the width of an animal restrained within the chamber (2).

6. An animal crush (1) as claimed in any preceding claim, in which at least a portion of the base panel (7) comprises a mesh sheet.

7. An animal crush (1) as claimed in any preceding claim, which further comprises a handle with which to rotate and invert the chamber (2).

8. An animal crush (1) as claimed in any preceding claim, in which the pivot (11) extends from the support framework (10) longitudinally along the centre of a side edge of the fixed side wall (6).

9. An animal crush (1) as claimed in any preceding claim, which is mountable on a mobile trailer unit (40).
